# EUROPEAN PATENT APPLICATION

(11) **EP 3 742 301 A1**
(43) Date of publication of application: **25.11.2020**
(21) Application number: 18901611.6
(22) Date of filing: 05.11.2018
(51) Int. Cl.: G06F 16/00, G10L 15/10, G06F 3/16, G10L 15/22, G06F 16/9032, G06F 40/20

(54) **INFORMATION PROCESSING DEVICE AND INFORMATION PROCESSING METHOD**

(30) Priority: 17.01.2018 JP 2018005484
(71) Applicant: Sony Corporation, 108-0075 Tokyo (JP)
(72) Inventor: TAKI, Yuhei, Tokyo 108-0075 (JP); IWASE, Hiro, Tokyo 108-0075 (JP); KAWANO, Shinichi, Tokyo 108-0075 (JP); SAWAI, Kunihito, Tokyo 108-0075 (JP)
(74) Representative: 2SPL Patentanwälte PartG mbB
(86) International application number: PCT/JP2018/040995
(87) International publication number: WO 2019/142447

(57) **Abstract**

To enable more appropriate assistance for input to an information processing apparatus.

Provided is an information processing apparatus including: an acquisition unit that acquires text information in the middle of performance of input; and an input-candidate extraction unit that extracts a candidate for the input on the basis of attribute information that is extracted on the basis of the text information.

## Description

### TECHNICAL FIELD

The present disclosure relates to an information processing apparatus and an information processing method.

### BACKGROUND ART

In recent years, systems and apparatuses to which a technology related to natural language understanding (NLU) is applied have been developed actively. For example, an agent apparatus that can perform speech input and the like are described as the systems and the apparatuses. Utterance for speech input to the agent apparatus by the user causes the agent apparatus to analyze the speech information and recognize the detail of the input. As a result, a function corresponding to the input can be achieved.

For example, Patent Document 1 below discloses a technology in which, in a case where an erroneous input has been made by speech, recognition accuracy in corrected utterance is increased to reduce the number of times of user's corrected utterances.

### CITATION LIST

### PATENT DOCUMENT

Patent Document 1: Japanese Patent Application Laid-Open No. 2016-062069

### SUMMARY OF THE INVENTION

### PROBLEMS TO BE SOLVED BY THE INVENTION

However, depending on the technology disclosed in Patent Document 1 or the like, appropriate assistance for input is insufficient. For example, in a case where an agent apparatus supports speech input, the user may not know what utterance to make for achieving a desired function. As a result, incorrect speech input by the user may result in performance of an unexpected process.

Therefore, the present disclosure proposes an information processing apparatus and information processing method that are novel and improved, the information processing apparatus and the information processing method enabling more appropriate assistance for input to the information processing apparatus.

### SOLUTIONS TO PROBLEMS

According to the present disclosure, provided is an information processing apparatus including: an acquisition unit that acquires text information in the middle of performance of input; and an input-candidate extraction unit that extracts a candidate for the input on the basis of attribute information that is extracted on the basis of the text information.

Further, according to the present disclosure, provided is an information processing method to be executed by a computer, the method including: acquiring text information in the middle of performance of input; and extracting a candidate for the input on the basis of attribute information that is extracted on the basis of the text information.

### EFFECTS OF THE INVENTION

As described above, the present disclosure enables more appropriate assistance for input to an information processing apparatus.

Note that the above effect is not necessarily limitative; and in addition to or instead of the above effect, there may also be exhibited any of effects indicated in the present specification or another effect that can be grasped from the present specification.

### BRIEF DESCRIPTION OF DRAWINGS

Fig. 1 illustrates an overview of a first embodiment according to the present disclosure.
Fig. 2 is an explanatory table of a relationship between an Entity and an Intent.
Fig. 3 is an explanatory table of an example sentence corresponding to an Intent.
Fig. 4 is a block diagram of an exemplary functional configuration of an information processing apparatus 100.
Fig. 5 illustrates an image of a first processing example by the information processing apparatus 100.
Fig. 6A is a flowchart of the first processing example by the information processing apparatus 100.
Fig. 6B is a flowchart of the first processing example by the information processing apparatus 100.
Fig. 7A illustrates an image of a second processing example by the information processing apparatus 100.
Fig. 7B illustrates an image of the second processing example by the information processing apparatus 100.
Fig. 8A is a flowchart of the second processing example by the information processing apparatus 100.
Fig. 8B is a flowchart of the second processing example by the information processing apparatus 100.
Fig. 9 illustrates an image of a third processing example by the information processing apparatus 100.
Fig. 10A is a flowchart of the third processing example by the information processing apparatus 100.
Fig. 10B is a flowchart of the third processing example by the information processing apparatus 100.
Fig. 11 illustrates an overview of a second embodiment according to the present disclosure.
Fig. 12 is a diagram of an exemplary hardware configuration of the information processing apparatus 100.

### MODE FOR CARRYING OUT THE INVENTION

Preferred embodiments of the present disclosure will be described in detail below with reference to the accompanying drawings. Note that, in the present specification and the drawings, the same signs are given to constituent elements having substantially the same functional configurations, and the redundant description thereof will be omitted.

Note that the description will be made in the following order.
1. First Embodiment
1.1. Background
1.2. Functional Overview of Information Processing Apparatus 100
1.3. Exemplary Functional Configuration of Information Processing Apparatus 100
1.4. Processing Examples by Information Processing Apparatus 100
2. Second Embodiment
3. Exemplary Hardware Configuration
4. Conclusion

### <1. First Embodiment>

### (1.1. Background)

First, the background of the present disclosure will be described.

As described above, in recent years, systems and apparatuses to which a technology related to natural language understanding is applied have been developed actively. For example, an agent apparatus that can perform speech input and the like are described as the systems and the apparatuses. Utterance for speech input to the agent apparatus by the user causes the agent apparatus to analyze the speech information and recognize the detail of the input. As a result, a function corresponding to the input can be achieved.

Here, when the user uses a system, an apparatus, or the like to which a technology related to natural language understanding is applied, the user may not know an input method for achieving a desired function. For example, in a case where an agent apparatus supports speech input, the user may not know what utterance to make for achieving a desired function. As a result, incorrect speech input by the user may result in performance of an unexpected process. As a matter of course, the user can recognize a correct input method by verifying the manual or the like. However, the user needs to memorize respective input methods for functions. Thus, as the number of functions is large, memorizing the input methods is difficult, which places a high load on the user.

Therefore, in view of the above circumstances, the person who has made the disclosure of the present case has created the technology of the present disclosure. An information processing apparatus 100 according to the present disclosure can acquire text information in the middle of performance of input, and can output a candidate for the input on the basis of attribute information extracted on the basis of the text information.

As a result, the information processing apparatus 100 can assist input more appropriately. More specifically, the information processing apparatus 100 can reduce the time and effort of the input that the user performs (in speech input, the amount of utterance). Further, the information processing apparatus 100 can cause the user to recognize a mounted function (that has not been recognized by the user) by outputting a candidate for the input.

Hereinafter, the information processing apparatus 100 that achieves the above features will be described in detail. Note that the technical concept according to the present disclosure is not limited to the examples given in the embodiments described below, and can be widely applied to various devices.

### (1.2. Functional Overview of Information Processing Apparatus 100)

The background of the present disclosure has been described above. Subsequently, a functional overview of the information processing apparatus 100 according to a first embodiment will be described.

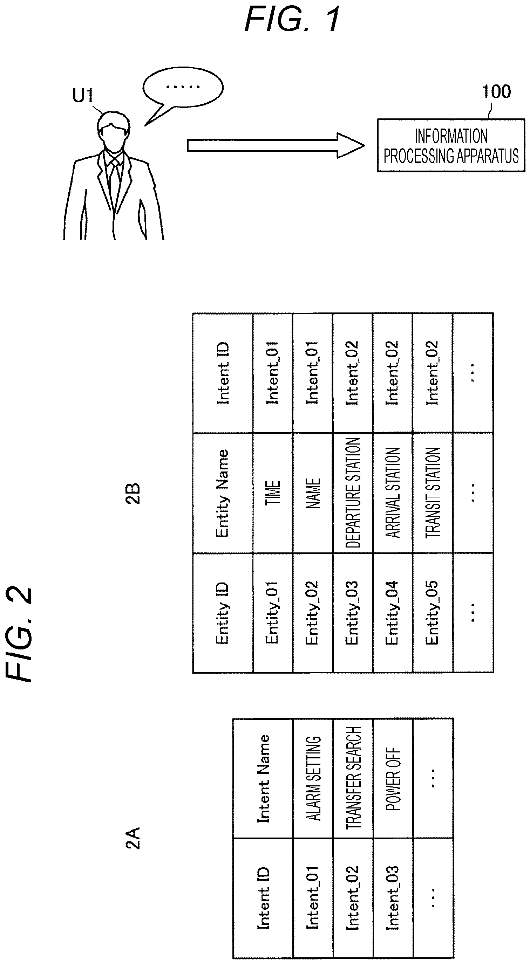

As illustrated in Fig. 1, the information processing apparatus 100 is an agent apparatus that receives speech input from a user U1. Further, the information processing apparatus 100 analyzes speech information in the middle of performance of the speech input by the user U1, converts the analyzed speech information into text information, and analyzes the text information. Then, the information processing apparatus 100 extracts attribute information corresponding to the text information.

The attribute information includes an Entity corresponding to an Intent indicating any function (or process). Here, an overview of the Intent and the Entity will be described with reference to Fig. 2.

First, an Intent is a concept indicating any function (or process). As indicated in 2A of Fig. 2, examples of the Intent include "Alarm setting", "Transfer search", "Power OFF", and the like. These functions may be executable by the information processing apparatus 100, or may be executable by an external device that communicates with the information processing apparatus 100. Note that the Intents indicated in 2A are merely examples, and thus an Intent is not limited thereto.

In addition, an Entity is any attribute information corresponding to the above Intent. As illustrated in 2B of Fig. 2, examples of the Entity include "Time", "Name", "Departure station", "Arrival station", "Transit Station", and the like. An Intent may correspond to a plurality of Entities. For example, Intent_01 of "Alarm setting" corresponds to Entity_01 of "Time" and Entity_02 of "Name", and Intent_02 of "Transfer search" corresponds to Entity_03 of "Departure station", Entity_04 of "Arrival station", and Entity_05 of "Transit station". In addition, although not indicated in the figure, an Entity may also correspond to a plurality of Intents. For example, Entity_01 of "Time" may correspond to Intent_02 of "Transfer search" as well as Intent_01 of "Alarm setting". Note that the Entities indicated in 2B are merely examples, and an Entity is not limited thereto.

After extracting an Entity as attribute information corresponding to the text information in the middle of the input, the information processing apparatus 100 recognizes an Intent corresponding to the Entity as a function (or process) that the user intends to achieve by the input. Then, the information processing apparatus 100 outputs a candidate for the input.

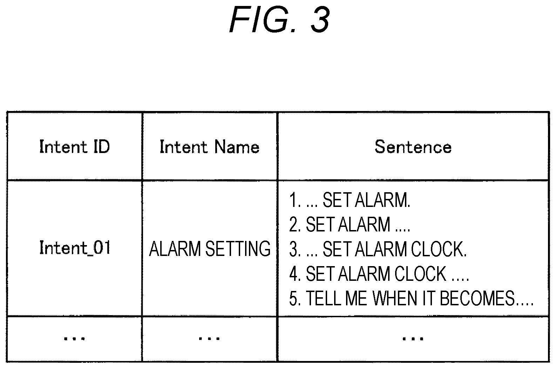

More specifically, as indicated in Fig. 3, an Intent has one or two or more example sentences ("Sentence" in the figure) that can call the function (or process) of the Intent. For example, as example sentences that can call the function (or process), Intent_01 of "Alarm setting" has "... set an alarm.", "Set an alarm....", "... set an alarm clock.", "Set an alarm clock....", "Tell me when it becomes....", and the like. Note that the detail of each example sentence that the Intent has is not limited particularly.

Then, the information processing apparatus 100 can select and output an appropriate example sentence from the example sentences that the Intent has, the Intent corresponding to the extracted Entity. For example, the information processing apparatus 100 can select an appropriate example sentence on the basis of the detail of the text information in the middle of the input. More specifically, in a case where the user has performed partial speech input by uttering "At 13:00", the information processing apparatus 100 selects and outputs "... set an alarm." as an example sentence that matches the context of the utterance. Note that the example sentence selecting method is not limited to this method.

Further, in order to be able to output a more suitable candidate for the input, the information processing apparatus 100 may select an example sentence that the Intent has, and then may edit and output the example sentence. For example, in a case where the Intent has an example sentence of "Set an alarm at...." and the user has uttered "At 13:00", the preposition "at" is duplicated. Thus, the information processing apparatus 100 may output "... set an alarm." formed by deletion of the preposition from the example sentence. This arrangement enables the text information to be a candidate for the input is more appropriate, so that the user does not easily feel awkwardness.

The user selects a desired input from candidates for the input provided by the information processing apparatus 100, so that the information processing apparatus 100 executes a function (or process) on the basis of the selected input.

As described above, on the basis of the text information in the middle of input, the information processing apparatus 100 outputs candidates for the input, and then causes the user to select a desired input from the candidates. As a result, the information processing apparatus 100 can assist the input appropriately. More specifically, the information processing apparatus 100 can reduce the time and effort of the input that the user performs (in speech input, the amount of utterance).

Further, the candidates for the input provided by the information processing apparatus 100 may include an input related to a function that the user has not recognized the function can be achieved. For example, in a case where the user utters "At 13:00" with the intention of setting an alarm and as a candidate for the input, not only "Set an alarm" but also "Set a recording reservation", "Play music", and the like that the user has not recognized are output, the user can recognize the presence of these functions, and thereafter can use these functions.

Note that input that is received by the information processing apparatus 100 is not limited to speech input, and may be any input. For example, the information processing apparatus 100 may be text input performed by the user with any input device including a keyboard or the like, gesture input performed by the user with movement or the like, or the like. Further, the subject of input that is received by the information processing apparatus 100 is not limited to the user, and may be any subject. For example, the subject of input that is received by the information processing apparatus 100 may be a different agent apparatus, an external device including a robot and the like, or the like.

Further, in the present specification, a case where the above processes are executed by the information processing apparatus 100 will be described exemplarily; however, modes to be carried out are not limited to this case. For example, a server communicable with the information processing apparatus 100 may be present, and the server may execute part of the processes of the information processing apparatus 100. More specifically, the information processing apparatus 100 may execute an input process and an output process, and the server may execute other processes (e.g., input-information analysis process, input-candidate extraction process, and the like).

### (1.3. Exemplary Functional Configuration of Information Processing Apparatus 100)

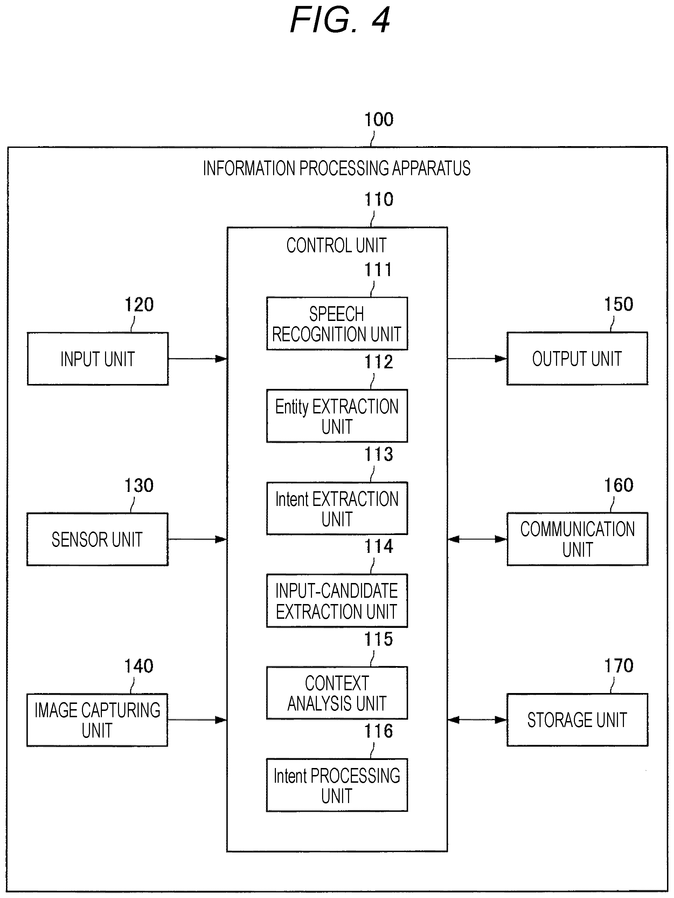

In the above, the functional overview of the information processing apparatus 100 has been described. Subsequently, an exemplary functional configuration of the information processing apparatus 100 will be described with reference to Fig. 4.

As illustrated in Fig. 4, the information processing apparatus 100 includes a control unit 110, an input unit 120, a sensor unit 130, an image capturing unit 140, an output unit 150, a communication unit 160, and a storage unit 170.

### (Control Unit 110)

The control unit 110 has a functional configuration for centrally controlling the overall processes performed by the information processing apparatus 100. For example, on the basis of input performed by the user with the input unit 120, the control unit 110 can control start and stop of each component, and can control the output unit 150 such as a display or a speaker. Note that the detail of the control by the control unit 110 is not limited to these examples. For example, the control unit 110 may control a process that is generally performed in a general-purpose computer, a personal computer (PC), a tablet PC, a smartphone, or the like.

Further, as illustrated in Fig. 4, the control unit 110 includes a speech recognition unit 111, an Entity extraction unit 112, an Intent extraction unit 113, an input-candidate extraction unit 114, a context analysis unit 115, and an Intent processing unit 116.

### (Speech Recognition Unit 111)

The speech recognition unit 111 has a functional configuration for performing speech recognition of input speech. Specifically, when acquiring speech information regarding utterance by the user that has been input via a microphone provided in the input unit 120, the speech recognition unit 111 performs acoustic analysis by using an acoustic model, and then executes a speech recognition process for the input speech by using, for example, dictionary information in which a phoneme and a word are registered in association with each other. Then, as a result of the speech recognition process, the speech recognition unit 111 converts the speech information regarding the utterance by the user into text information (in other words, the speech recognition unit 111 functions as an acquisition unit that acquires text information). The above speech recognition process by the speech recognition unit 111 is sequentially performed in parallel with speech input that the user performs. Then, the speech recognition unit 111 sequentially provides the text information to the Entity extraction unit 112.

Further, the speech recognition unit 111 manages the respective feature amounts of speech of a plurality of users, and may identify a user who has uttered by pattern matching between the feature amounts and the input speech information. The information regarding the identified user can be used for subsequent processes. Note that the above speech-recognition processing method is not limited particularly, and it is sufficient if a known speech recognition technique is used.

### (Entity Extraction Unit 112)

The Entity extraction unit 112 has a functional configuration for extracting an Entity on the basis of the text information output by the speech recognition unit 111. More specifically, the Entity extraction unit 112 analyzes the text information sequentially output in parallel with the speech input that the user performs, and then attempts to extract the Entity corresponding to the text information.

The Entity extracting method is not limited particularly. For example, the Entity extraction unit 112 may extract the Entity on the basis of the meaning, order, preposition, auxiliary verb, or the like of words included in the text information. More specifically, in a case where text information of "13" is output from the speech recognition unit 111, the Entity extraction unit 112 can simply extract an Entity of "numeric". Thereafter, in a case where the information is added and text information of "13:00" is output, the Entity extraction unit 112 can extract an Entity of "Time" on the basis of the meaning of "13:00". Note that if the speech recognition unit 111 is recognizable of a blank (blank time between words), voice tone, accent, intonation, or the like in utterance by the user, the Entity extraction unit 112 may extract an Entity on the basis of the blank, voice tone, accent, intonation, or the like in the utterance by the user.

Further, if at least one or two or more keywords corresponding to an Entity are present, the Entity extraction unit 112 may search for the at least one or two or more keywords from the text information sequentially output from the speech recognition unit 111, and thus may extract the Entity corresponding to the keyword (keywords).

Furthermore, the Entity extraction unit 112 may extract an Entity by using a situation or environment in which the user is placed, a state, action, or the like of the user (hereinafter, a concept including these is referred to as a "context"), user information (e.g., attribute information, preference information, or the like), history information regarding the user (e.g., action history information, location history information, or the like), or the like.

For example, the Entity extraction unit 112 may perform weighting on the basis of a context including various pieces of information such as the detail of utterance by the user, the time, a location of the user, an action of the user, a different user who acts in line with the user, or the like, and thus may extract the Entity. More specifically, in such a case where two Entities of "Person name" and "Place name" are extracted due to utterance by the user, if the Entity extraction unit 112 determines there is a low association between the "Place name" and the location of the user on the basis of the context (e.g., a case where the isolation distance between the "Place name" and the location of the user is long, and other cases), the Entity extraction unit 112 may extract, with higher priority, the "Person name" as the Entity. This arrangement enables the Entity extraction unit 112 to extract a more appropriate Entity in accordance with the context.

Similarly to the above, the Entity extraction unit 112 can perform weighting on the basis of the user information (e.g., attribute information, preference information, or the like), the history information regarding the user (e.g., action history information, location history information, or the like), or the like, and thus can achieve an Entity extraction process suitable for an individual user (in other words, the Entity extraction process can be personalized).

Further, in a case where the Entity extraction unit 112 has extracted a plurality of Entities by speech input, the Entity extraction unit 112 may perform weighting on the basis of the association among the Entities. For example, it is assumed that after extracting Entities of "Person name" and "Place name" by speech input, the Entity extraction unit 112 has extracted an Entity of "Railroad" by further speech input. In this case, the Entity extraction unit 112 may set a weight to the Entity of "Place name" having a higher association with the "Railroad" such that the weight is greater than the weight of the Entity of "Person name".

Further, the Entity extraction unit 112 may extract an Entity on the basis of the co-occurrence relationship among the plurality of extracted Entities. For example, in a case where the "Railroad" and "Station" have a co-occurrence relationship, the Entity extraction unit 112 may set respective weights to these Entities in the co-occurrence relationship such that the weights are greater than the weight of the Entity of "Person name". This arrangement enables the Entity extraction unit 112 to exclude an impossible combination of Entities based on the detail of utterance or reduce the respective weights of these Entities, and thus the Entity extraction unit 112 can extract a higher accurate Entity. Note that the Entity extraction process is not limited to the above, and can be changed appropriately. The Entity extraction unit 112 provides the extracted Entity to the Intent extraction unit 113.

### (Intent Extraction Unit 113)

The Intent extraction unit 113 has a functional configuration for extracting an Intent on the basis of the Entity. More specifically, the Intent extraction unit 113 searches for an Intent corresponding to the Entity extracted by the Entity extraction unit 112. If a plurality of Intents corresponding to the Entity is present, the Intent extraction unit 113 extracts the plurality of Intents. Note that information regarding the correspondence between the Entity and the Intent (e.g., information indicated in 2B of Fig. 2 and the like) may be included in software to be used for the process by the Intent extraction unit 113, or may be stored in a table of the storage unit 170.

Further, similarly to the Entity extraction unit 112, the Intent extraction unit 113 may extract the Intent by using the context, the user information (e.g., attribute information, preference information, or the like), the history information regarding the user (e.g., action history information, location history information, or the like), or the like.

For example, the Intent extraction unit 113 may perform weighting on the basis of a context including various pieces of information such as the detail of utterance by the user, the time, a location of the user, an action of the user, a different user who acts in line with the user, or the like, and thus may extract the Intent. More specifically, in a case where the user intends to send a message to a different user, the Intent extraction unit 113 may estimate the relationship between the user and the different user as the destination on the basis of the detail of the utterance by the user. Then, the Intent extraction unit 113 may change software for sending a message, depending on whether the different user as the destination is a friend or not.

Further, in a case where the user has performed speech input in order to search for a nearby spot, the Intent extraction unit 113 may change the interpretation of "near" depending on whether the user is moving by car or moving on foot. For example, the Intent extraction unit 113 may interpret that "near" refers to within 10 km in a case where the user is moving by car, and "near" refers to within 200 m in a case where the user is moving on foot. With these processes, the Intent extraction unit 113 can extract a more appropriate Intent in accordance with the context.

Similarly to the above, the Intent extraction unit 113 can perform weighting on the basis of the user information (e.g., attribute information, preference information, or the like), the history information regarding the user (e.g., action history information, location history information, or the like), or the like, and thus can achieve an Intent extraction process suitable for an individual user (in other words, the Intent extraction process can be personalized).

Note that the Intent extraction process is not limited to the above, and can be changed appropriately. For example, the Intent extraction unit 113 may perform weighting on the basis of the type of software in operation, and thus may extract the Intent. The Intent extraction unit 113 provides the extracted Intent to the input-candidate extraction unit 114.

### (Input-Candidate Extraction Unit 114)

The input-candidate extraction unit 114 has a functional configuration for extracting an input candidate on the basis of the Intent. More specifically, the input-candidate extraction unit 114 extracts an appropriate example sentence from at least one or two or more example sentences (see Fig. 3) that can call the Intent extracted by the Intent extraction unit 113. The extracted example sentence is provided to the user via provision to the output unit 150.

Further, as described above, in order to be able to output a more suitable candidate for the input, the input-candidate extraction unit 114 may select an example sentence that the Intent has, and then may edit and output the example sentence.

### (Context Analysis Unit 115)

The context analysis unit 115 has a functional configuration for recognizing the context by using the speech information recognized by the speech recognition unit 111, various types of sensor information sensed by the sensor unit 130, captured-image information generated by the image capturing unit 140, and the like. Note that the above context-recognition processing method is not limited particularly, and it is sufficient if a known context recognition technique is used. The context analysis unit 115 provides information regarding the recognized context to the Entity extraction unit 112, the Intent extraction unit 113, or the like.

### (Intent Processing Unit 116)

The Intent processing unit 116 has a functional configuration for executing a process related to an Intent. For example, in a case where the user selects a desired input from the input candidates, the Intent processing unit 116 executes the process related to the Intent corresponding to the input. For example, the Intent processing unit 116 generates control information for controlling each functional configuration of the information processing apparatus 100 and then provides the control information to each functional configuration, so that the Intent processing unit 116 executes the process. Further, the Intent processing unit 116 may provide the generated control information to an external device via the communication unit 160, and thus may execute the process in cooperation with the external device.

Further, the Intent processing unit 116 can also execute the process related to the Intent without waiting for the completion of the utterance related to the speech input that the user performs. In this case, on the basis of an execution condition of the process related to the Intent, the Intent processing unit 116 determines whether or not to execute the process related to the Intent without waiting for the completion of the utterance related to the speech input that the user performs. For example, on the basis of the detail of ongoing utterance by the user, a context, an action history of the user, or the like, if the possibility of the execution of the process related to the Intent extracted due to the utterance in the context in which utterance has been made is higher than a predetermined value, the Intent processing unit 116 may execute the process related to the Intent without waiting for the completion of the utterance related to the speech input that the user performs. The specific example will be described later.

### (Input Unit 120)

The input unit 120 has a functional configuration for receiving input. For example, the input unit 120 includes a microphone or the like for collecting speech information, and has a functional configuration for collecting speech information such as ambient sounds generated around the information processing apparatus 100, utterance by the user, and the like. The speech information collected by the input unit 120 is used for the speech recognition process by the speech recognition unit 111, the context analysis process by the context analysis unit 115, or the like.

Further, the input unit 120 may include various types of input devices such as a mouse, a keyboard, a touch panel, a button, or a switch, for example, and receives input performed with these input devices. The input unit 120 provides the information that has been input (e.g., speech information) to the control unit 110. Note that the input means is not limited to the above.

### (Sensor Unit 130)

The sensor unit 130 has a functional configuration for collecting various pieces of sensor information regarding the situation or environment in which the user is placed, the state or action, or the like of the user. The types of sensor information that is collected by the sensor unit 130 are not limited particularly. For example, the sensor information that is collected by the sensor unit 130 includes information output from any sensor such as an accelerometer, a gyro sensor, a geomagnetic sensor, a barometric pressure sensor, a temperature sensor, a vibration sensor, a heart rate sensor, a pulse wave sensor, a proximity sensor, an illuminance sensor, a pressure sensor, a position sensor (e.g., global navigation satellite system (GNSS) sensor), a sweat sensor, a pH sensor, a humidity sensor, or an infrared sensor. Note that the sensor unit 130 may collect the sensor information from an external device including these various types of sensors. The sensor unit 130 provides the collected sensor information to the context analysis unit 115.

### (Image capturing Unit 140)

The image capturing unit 140 has a functional configuration for capturing an image of the user and its ambient environment. More specifically, the image capturing unit 140 includes an image sensor (e.g., charge-coupled device (CCD) sensor, complementary metal oxide semiconductor (CMOS) sensor, or the like), and captures, with the sensor, the image of the user and its ambient environment. Then, the image capturing unit 140 provides the generated captured-image information to the context analysis unit 115. Note that the above image includes a moving image in addition to a still image.

### (Output Unit 150)

The output unit 150 has a functional configuration for outputting various types of information. For example, the output unit 150 can output the various types of information to a display means such as a display, an audio output means such as a speaker or an amplifier, or the like. For example, the output unit 150 can display on the display or output as audio from the speaker, information regarding the input candidate provided from the input-candidate extraction unit 114, a result of the process related to the Intent executed by the Intent processing unit 116, or the like. Note that the output means is not limited to the above.

### (Communication Unit 160)

The communication unit 160 has a functional configuration for performing various types of communication between the information processing apparatus 100 and an external device. For example, the communication unit 160 may send the control information generated by the Intent processing unit 116 to the external device or the like, and thus may cause the external device to execute the process related to the Intent. Note that the information with which the communication unit 160 makes communication and the case where the communication unit 160 makes communication are not limited to the above. Further, the communication scheme between the communication unit 160 and the external device is not limited particularly.

### (Storage Unit 170)

The storage unit 170 has a functional configuration for storing various types of information. For example, the storage unit 170 can store speech information that is input from the input unit 120, text information that is output by the speech recognition unit 111, information regarding an Entity (e.g., Entity ID, Entity Name, Intent ID corresponding to an Entity, or the like as indicated in 2B of Fig. 2), information regarding an Intent (e.g., Intent ID, or Intent Name as indicated in 2A of Fig. 2, example sentence information as indicated in Fig. 3, or the like), information regarding a context that is output by the context analysis unit 115, user information (e.g., attribute information, feature amount information such as speech, preference information, or the like), history information regarding the user (e.g., action history information, location history information, or the like), or the like. Further, the storage unit 170 stores various types of programs, various types of parameters, or the like to be used for the processes by the information processing apparatus 100. Note that the information stored in the storage unit 170 is not limited to these pieces of information, programs, and parameters.

The exemplary functional configuration of the information processing apparatus 100 has been described above. Note that the above functional configurations described with reference to Fig. 4 is merely an example, and the functional configuration of the information processing apparatus 100 is not limited to the example. For example, the information processing apparatus 100 may not necessarily include all of the configurations illustrated in Fig. 4. Further, the functional configuration of the information processing apparatus 100 can be flexibly modified in accordance with specifications and operations.

### (1.4. Processing Examples by Information Processing Apparatus 100)

In the above, the exemplary functional configuration of the information processing apparatus 100 has been described. Subsequently, processing examples by the information processing apparatus 100 will be described.

### (1.4.1. First Processing Example)

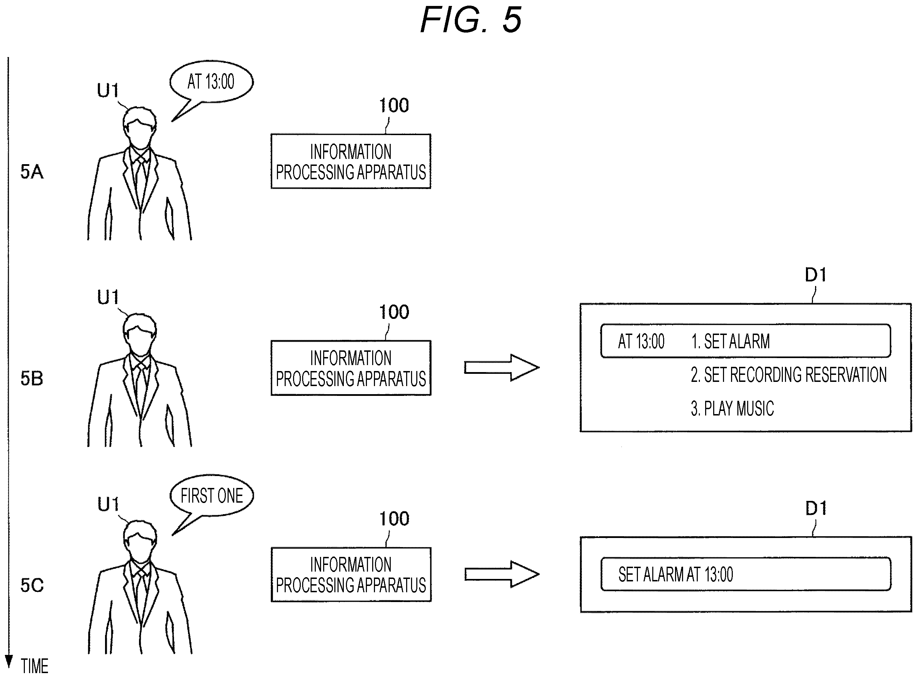

First, a first processing example will be described with reference to Fig. 5. Fig. 5 illustrates an image of the first processing example by the information processing apparatus 100.

In a case where a user U1 who intends to set an alarm at 13:00 is present, the user U1 starts speech input to the information processing apparatus 100 as illustrated in 5A of Fig. 5. The user U1 utters "At 13:00". Then, the information processing apparatus 100 analyzes the speech information in the middle of the input, so that as illustrated in 5B, the information processing apparatus 100 displays, on a display D1, input candidates such as "1. Set an alarm", "2. Set a recording reservation", and "3. Play music".

Then, as illustrated in 5C, utterance of "First one" by the user U1 causes the information processing apparatus 100 to recognize that "1. Set an alarm" has been selected from the input candidates. Thereafter, the information processing apparatus 100 displays the recognition result on the display D1, and then performs a process corresponding to the selected input.

This arrangement enables the information processing apparatus 100 to reduce the amount of utterance at the time of speech input by the user. Note that Fig. 5 is merely an example, and the detail of the process and the detail of the utterance by the user can be changed appropriately. For example, in 5C, if an input desired by the user is identified from the input candidates by any method, the selection method is not limited particularly. More specifically, the user may read out text information displayed on the display D1, as it is, or may select with a pointer or the like by using any input device such as a controller.

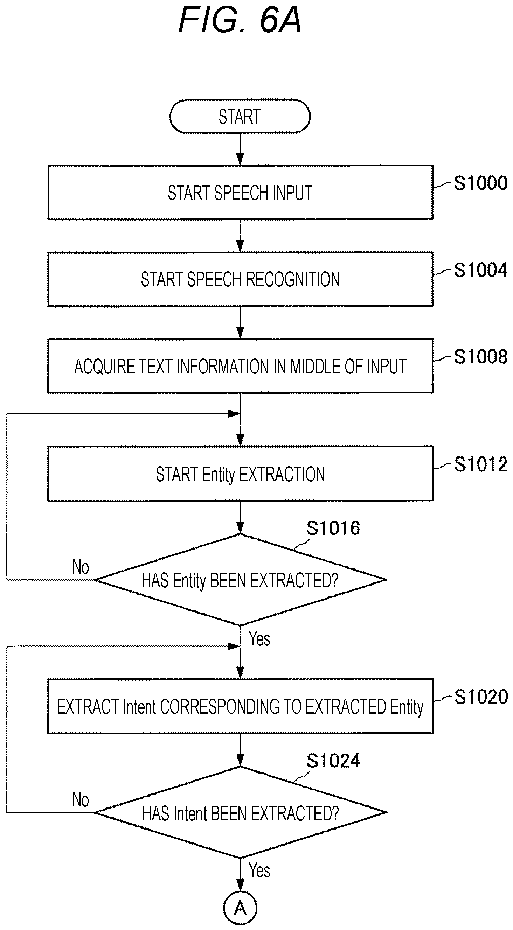

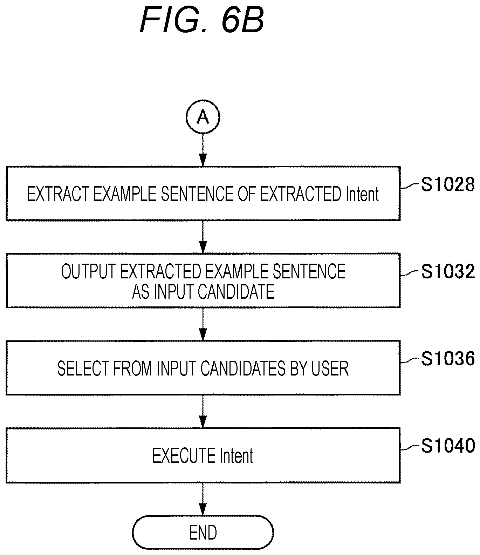

The first processing example illustrated in Fig. 5 is achieved by, for example, the respective processes of the functional configurations of the information processing apparatus 100 illustrated in the flowcharts of Figs. 6A and 6B.

More specifically, in step S1000, the user starts speech input by uttering to the information processing apparatus 100, and in step S1004, the speech recognition unit 111 of the information processing apparatus 100 starts the speech recognition. More specifically, the speech recognition unit 111 sequentially converts the speech information into text information in parallel with the speech input that the user performs. Thereafter, in step S1008, the Entity extraction unit 112 sequentially acquires the text information in the middle of the input, and in step S1012, attempts to extract an Entity corresponding to the text information.

In a case where the Entity corresponding to the text information has been extracted (step S1016/yes), in step S1020, the Intent extraction unit 113 extracts an Intent corresponding to the extracted Entity. In a case where the Entity corresponding to the text information has not been extracted in step S1016 (step S1016/no), the process returns to step S1012, and the Entity extraction process is continued.

In a case where the Intent corresponding to the Entity has been extracted (step S1024/yes), in step S1028, the input-candidate extraction unit 114 extracts an appropriate example sentence from at least one or two or more example sentences that can call the extracted Intent. In a case where the Intent corresponding to the Entity has not been extracted in step S1024 (step S1024/no), the process returns to step S1020, and the Intent extraction process is continued. In step S1032, the input-candidate extraction unit 114 outputs the extracted example sentence as an input candidate.

In step S1036, the user selects one input from the input candidates that have been output. In step S1040, the Intent processing unit 116 executes a process related to the Intent selected by the user, so that the process ends.

### (1.4.2. Second Processing Example)

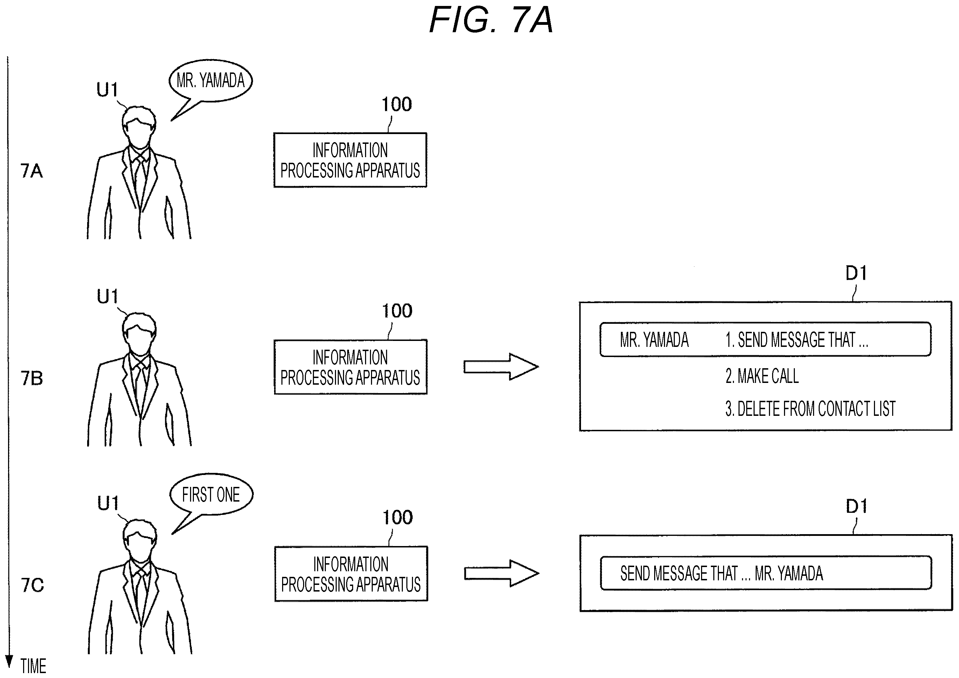

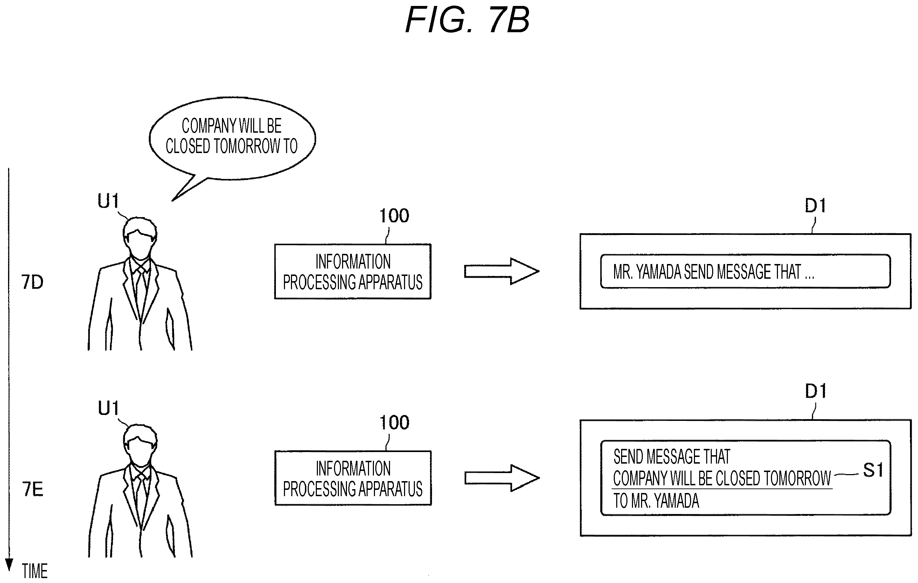

Subsequently, a second processing example will be described with reference to Fig. 7. Fig. 7 illustrates an image of the second processing example by the information processing apparatus 100. A second embodiment is an example of a case in which information is insufficient for execution of a process related to an Intent only by selection of an input candidate, and the insufficient information is separately input.

In a case where a user U1 who intends to send a message to Mr. Yamada is present, the user U1 starts speech input to the information processing apparatus 100, as illustrated in 7A of Fig. 7. The user U1 utters "Mr. Yamada". Then, the information processing apparatus 100 analyzes the speech information in the middle of the input, so that as illustrated in 7B, the information processing apparatus 100 displays input candidates such as "1. Send a message that...", "2. Make a call", and "3. Delete from a contact list", on the display D1.

Then, as illustrated in 7C, utterance of "First one" by the user U1 causes the information processing apparatus 100 to recognize that "1. Send a message that..." has been selected from the input candidates. Thereafter, the information processing apparatus 100 displays the recognition result on the display D1.

In 7C, the detail of the message has not been input, and thus the information processing apparatus 100 cannot execute the process related to the Intent. Therefore, as illustrated in 7D, the user U1 utters for inputting the detail of the message. For example, the user U1 utters, "The company will be closed tomorrow". This utterance causes the information processing apparatus 100 to recognize the detail of the message, and then displays the detail of the message on the display D1 as detail S1, as illustrated in 7E.

As a result, the information processing apparatus 100 can cause the user U1 to input the information insufficient for the execution of the process related to the Intent separately from selection of an input candidate, while reducing the amount of utterance at the time of speech input. Note that Fig. 7 is merely an example, and the detail of the process and the detail of the utterance by the user can be changed appropriately. For example, in 7D, if the insufficient information is input by any method, the input method is not limited particularly. More specifically, the user may input the insufficient information by using any input device such as a keyboard or a controller. Further, the order of the selection of the input candidate (7C in Fig. 7) and the input of the insufficient information (7D in Fig. 7) may be changed appropriately.

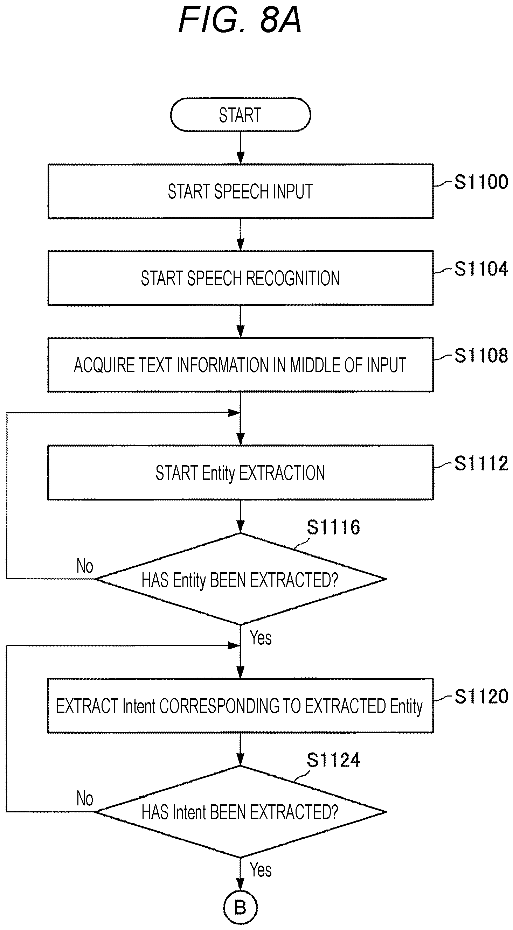

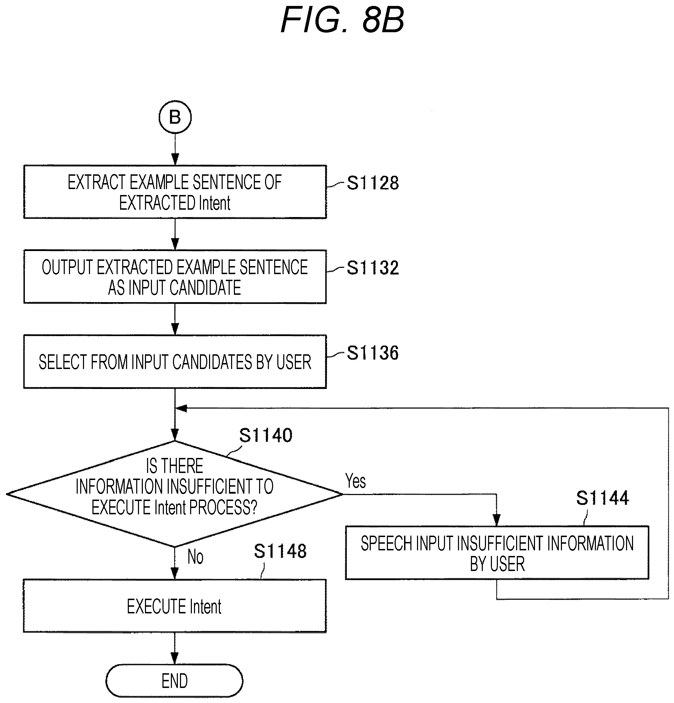

The second processing example illustrated in Fig. 7 is achieved by, for example, the respective processes of the functional configurations of the information processing apparatus 100 illustrated in the flowcharts of Figs. 8A and 8B. Note that steps S1100 to S1136 are the same as steps S1000 to S1036 illustrated in Figs. 6A and 6B, and thus the description thereof will be omitted.

In a case where there is information insufficient for the execution of the Intent process (step S1140/yes) in step S1140, the user inputs the insufficient information by speech in step S1144. Then, in a case where there is no information insufficient for the execution of the Intent process (step S1140/no), the Intent processing unit 116 executes the process related to the Intent in step S1148, so that the process ends.

### (1.4.3. Third Processing Example)

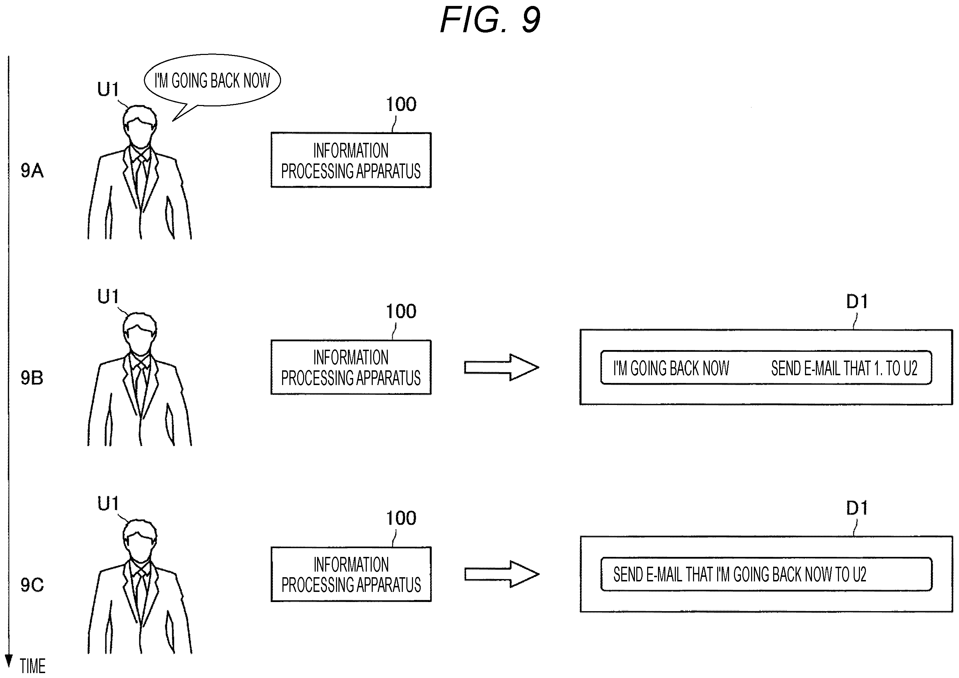

Subsequently, a third processing example will be described with reference to Fig. 9. Fig. 9 illustrates an image of the third processing example by the information processing apparatus 100. A third embodiment is an example of a case in which a process related to an Intent is performed without waiting for the completion of utterance related to speech input that the user performs.

In a case where a user U1 who intends to send an e-mail of "I'm going back now" to a user U2 is present, the user U1 starts speech input to the information processing apparatus 100 as illustrated in 9A of Fig. 9. The user U1 utters, "I'm going back now". Then, the information processing apparatus 100 analyzes the speech information in the middle of the input, so that as illustrated in 9B, the information processing apparatus 100 displays an input candidate such as "Send an e-mail that 1. to U2" on the display D1.

Then, on the basis of the execution condition of the process related to the Intent, the information processing apparatus 100 determines whether or not to execute the process related to the Intent without waiting for the completion of the utterance related to the speech input that the user U1 performs. For example, on the basis of the detail of ongoing utterance by the user U1, a context, an action history of the user U1, or the like, if the possibility of the execution of the process related to the Intent extracted due to the utterance in the context in which utterance has been made is higher than a predetermined value, the information processing apparatus 100 may confirm the input of "Send an e-mail that 1. to U2" as illustrated in 9C, and thus may execute the process related to the Intent without waiting for the completion of the utterance related to the speech input that the user U1 performs.

This arrangement enables the information processing apparatus 100 to significantly reduce the amount of utterance at the time of speech input. Note that Fig. 9 is merely an example, and the detail of the process and the detail of the utterance by the user can be changed appropriately. For example, the user U1 may be able to separately set, by using the information processing apparatus 100, the detail of the Intent that causes the execution of the process without waiting for the completion of the utterance related to the speech input. Alternatively, the user U1 may be able to separately set validation or invalidation of the function, by using the information processing apparatus 100.

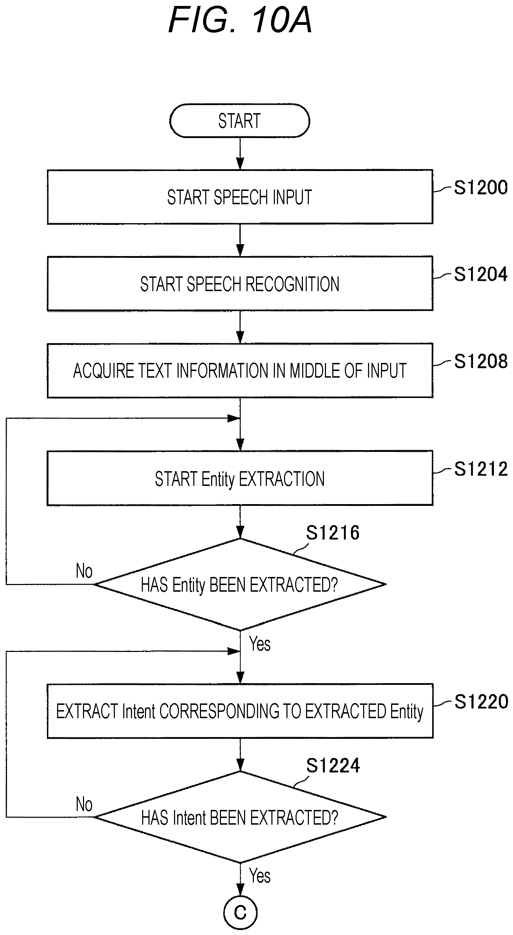

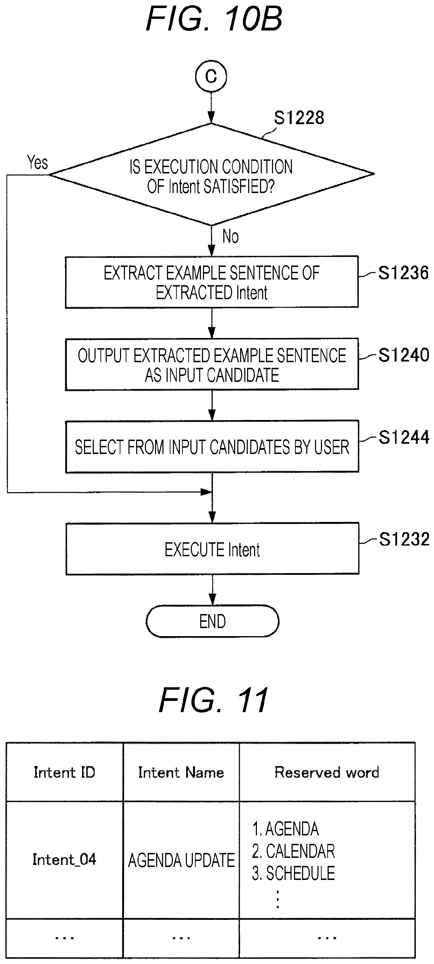

The third processing example illustrated in Fig. 9 is achieved by, for example, the respective processes of the functional configurations of the information processing apparatus 100 illustrated in the flowcharts of Figs. 10A and 10B. Note that steps S1200 to S1224 are the same as steps S1000 to S1024 illustrated in Figs. 6A and 6B, and thus the description thereof will be omitted.

In step S1228, on the basis of the execution condition of the process related to the Intent, the Intent processing unit 116 determines whether or not to execute the process related to the Intent without waiting for the completion of the utterance related to the speech input that the user performs. In a case where the execution condition of the process related to the Intent is satisfied (step S1228/Yes), in step S1232, the Intent processing unit 116 executes the process related to the Intent, so that the process ends.

In a case where the execution condition of the process related to the Intent is not satisfied (step S1228/No), the input-candidate extraction unit 114 extracts an appropriate example sentence from at least one or two or more example sentences that can call the extracted Intent in S1236, and then outputs the extracted example sentences as an input candidate in S1240.

Then, in step S1244, the user selects one input from the input candidates that have been output. In step S1232, the Intent processing unit 116 executes the process related to the Intent selected by the user, so that the process ends.

Note that each step in the flowcharts indicated in Figs. 6A, 6B, 8A, 8B, 10A, and 10B may not necessarily need to be processed chronologically in the described order. That is, each step in the flowcharts may be processed in an order different from the described order, or may be processed parallelly.

### <2. Second Embodiment>

In the above, the first embodiment according to the present disclosure has been described. Subsequently, a second embodiment according to the present disclosure will be described.

In the first embodiment, the Intent extraction unit 113 extracts an Intent on the basis of an Entity extracted by the Entity extraction unit 112. However, with this method, there is a possibility that an appropriate Intent is not extracted.

For example, consider a case in which an Intent related to update of an agenda corresponds to an Entity such as "Time" and the user who intends to update the agenda has uttered "Calendar". At this time, in a case where the Entity of "Time" is not extracted from the utterance of "Calendar", the Intent extraction unit 113 cannot extract the Intent related to the update of the agenda.

Therefore, in the second embodiment, the Intent extraction unit 113 also uses, for the Intent extraction process, together a reserved word of the Intent as attribute information excluding the Entity.

Here, the reserved word of the Intent is a word that is frequently used when indicating a function related to the Intent. For example, in a case where the function related to the Intent is "Agenda update", the reserved word of the Intent may be "1. agenda", "2. calendar", "3. schedule", or the like as indicated in Fig. 11.

As a result, even in a case where the Entity has not been extracted appropriately, the Intent extraction unit 113 can appropriately extract the Intent on the basis of the reserved word. If the above example, the Intent extraction unit 113 can appropriately extract the Intent having the reserved word of "calendar" on the basis of the utterance of "Calendar".

Note that in the example indicated in Fig. 11, each reserved word is a synonym or a near-synonym of "agenda" that is a part of the function related to the Intent "Agenda update". However, if the word is frequently used when indicating a function related to the Intent, the detail of the reserved word is not limited particularly. For example, the reserved word may be "previous arrangement", "program", "plan", or "schedule" having a deep association with "agenda", which is part of the function related to the Intent "Agenda update". Alternatively, the reserved word may be a software name (or application name) to be used for achievement of the function related to Intent "Agenda update". Further, the reserved word may be editable by the user.

Further, even in a case where the user has not uttered the same detail as the reserved word, the Intent extraction unit 113 may interpret the meaning of the utterance, and thus may recognize a synonym or a near-synonym of a word included in the detail of the utterance, or a word having a deep association with the word, so that the Intent extraction unit 113 may extract the Intent by using these words. This arrangement enables the Intent extraction unit 113 to improve the accuracy of the Intent extraction.

### <3. Exemplary Hardware Configuration>

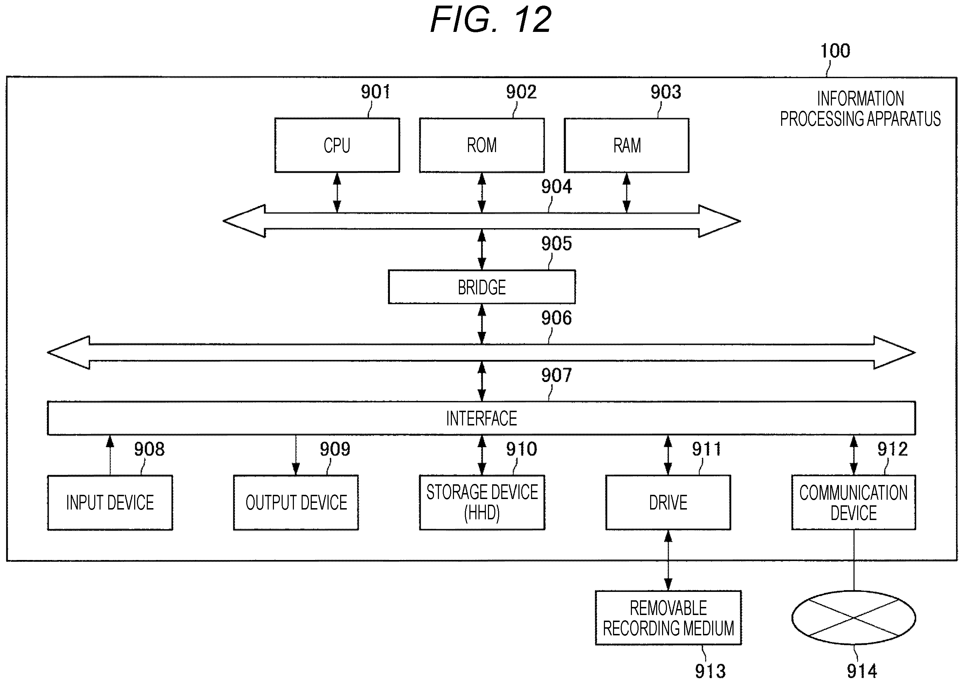

In the above, the second embodiment according to the present disclosure has been described. Subsequently, an exemplary hardware configuration of the information processing apparatus 100 will be described with reference to Fig. 12.

Fig. 12 is a diagram illustrating the hardware configuration of the information processing apparatus 100. The information processing apparatus 100 includes a central processing unit (CPU) 901, a read only memory (ROM) 902, a random access memory (RAM) 903, a host bus 904, a bridge 905, an external bus 906, an interface 907, an input device 908, an output device 909, a storage device (HDD) 910, a drive 911, and a communication device 912.

The CPU 901 functions as an arithmetic processing device and a control device, and controls the overall operation in the information processing apparatus 100 in accordance with various types of programs. Further, the CPU 901 may be a microprocessor. The ROM 902 stores, for example, programs and arithmetic parameters to be used by the CPU 901. The RAM 903 temporarily stores, for example, programs to be used for execution by the CPU 901, and parameters that appropriately change in the execution. The CPU901, the ROM 902, and the RAM 903 are mutually connected by the host bus 904 including a CPU bus and the like. Respective functions of the control unit 110, the sensor unit 130, or the image capturing unit 140 of the information processing apparatus 100 are achieved by cooperation of the CPU 901, the ROM 902, and the RAM 903.

The host bus 904 is in connection with the external bus 906 such as a peripheral component interconnect/interface (PCI) bus via the bridge 905. Note that the host bus 904, the bridge 905, and the external bus 906 are not necessarily separated, and these functions may be implemented on one bus.

The input device 908 includes input means such as a mouse, a keyboard, a touch panel, a button, a microphone, a switch, and a lever with which the user inputs information, an input control circuit that generates an input signal on the basis of input that the user performs and outputs the input signal to the CPU 901, and the like. The user of the information processing apparatus 100 operates the input device 908, so that the user can input various types of information to each device and instruct each device on a processing operation. The function of the input unit 120 is achieved by the input device 908.

The output device 909 includes a display device such as a cathode ray tube (CRT) display device, a liquid crystal display (LCD) device, an organic light emitting diode (OLED) device, and a lamp, for example. Further, the output device 909 includes an audio output device such as a speaker and a headphone. The output device 909 outputs, for example, a reproduced content. Specifically, the display device displays, as a text or an image, various types of information such as reproduced video data. On the other hand, the audio output device converts reproduced audio data and the like into audio, and then outputs the audio. The function of the output unit 150 is achieved by the output device 909.

The storage device 910 is a device for storing data. The storage device 910 may include a storage medium, a recording device that records data in the storage medium, a reading device that reads the data from the storage medium, a deletion device that deletes the data recorded in the storage medium, and the like. The storage device 910 includes, for example, a hard disk drive (HDD). This storage device 910 drives a hard disk, and stores the programs to be executed by the CPU 901, and various types of data. Each function of the storage unit 170 is achieved by the storage device 910.

The drive 911 is a reader/writer for the storage medium, and is built in or externally attached to the information processing apparatus 100. The drive 911 reads information recorded in a removable storage medium 913 such as a magnetic disk, an optical disk, a magnetooptical disk, or a semiconductor memory attached to the drive 911, and outputs the read information to the RAM 903. Further, the drive 911 can also write information to the removable storage medium 913.

The communication device 912 is, for example, a communication interface including, a communication device for connecting to a communication network 914 and the like. Each function of the communication unit 160 is achieved by the communication device 912.

### <4. Conclusion>

As described above, the information processing apparatus 100 according to the present disclosure can acquire text information in the middle of performance of input, and can output a candidate for the input on the basis of attribute information extracted on the basis of the text information.

As a result, the information processing apparatus 100 can assist input more appropriately. More specifically, the information processing apparatus 100 can reduce the time and effort of the input that the user performs (in speech input, the amount of utterance). Further, the information processing apparatus 100 can cause the user to recognize a mounted function (that has not been recognized by the user) by outputting a candidate for the input.

Further, in extraction of an Intent, the information processing apparatus 100 can extract the Intent by using not only an Entity extracted on the basis of the text information in the middle of the performance of the input but also a reserved word of the Intent. As a result, the information processing apparatus 100 can improve the accuracy of the Intent extraction.

The preferred embodiments of the present disclosure have been described above in detail with reference to the accompanying drawings; however, the technical scope of the present disclosure is not limited to the examples. It is obvious that persons having ordinary knowledge in the technical field of the present disclosure can conceive various types of alternation examples or modification examples within the scope of the technical idea described in the claims, and it is also naturally understood that such alternation examples or modification examples belong to the technical scope of the present disclosure.

Further, the effects described in the present specification are merely explanatory or exemplary, and are not limitative. That is, the technology according to the present disclosure can exhibit other effects obvious to those skilled in the art from the description of the present specification, together with or instead of the above effects.

Note that the following configurations also belong to the technical scope of the present disclosure.
(1) An information processing apparatus including:
   an acquisition unit that acquires text information in a middle of performance of input; and
   an input-candidate extraction unit that extracts a candidate for the input on the basis of attribute information that is extracted on the basis of the text information.
(2) The information processing apparatus according to (1),
   in which the input is input that a user performs.
(3) The information processing apparatus according to (2),
   in which the input is speech input that the user performs.
(4) The information processing apparatus according to (3), further including:
   a speech recognition unit that analyzes speech information in a middle of performance of the speech input, to output the text information.
(5) The information processing apparatus according to any one of (1) to (4),
   in which the attribute information is information indicating an attribute of an Intent indicating a certain function.
(6) The information processing apparatus according to (5),
   in which the input-candidate extraction unit extracts, as the candidate for the input, an example sentence corresponding to the Intent that is extracted on the basis of the attribute information.
(7) The information processing apparatus according to (5) or (6),
   in which the attribute information is an Entity.
(8) The information processing apparatus according to (7),
   in which in a case where a plurality of Entities is extracted on the basis of the text information, weighting is performed on the Entity on the basis of a degree of association between the plurality of Entities, or presence or absence of a co-occurrence relationship between the plurality of Entities.
(9) The information processing apparatus according to (7) or (8),
   in which the Entity or the Intent is extracted on the basis of any of user's preference information, history information regarding the user, and a context including a situation or environment where the user is placed or a state or action of the user.
(10) The information processing apparatus according to (5) or (6),
   in which the attribute information is information regarding a reserved word indicating the Intent.
(11) The information processing apparatus according to any one of (5) to (9), further including:
   an Intent processing unit that executes a process related to the Intent.
(12) The information processing apparatus according to (11),
   in which in a case where the text information is insufficient for execution of the process, the acquisition unit acquires text information separately input.
(13) The information processing apparatus according to (11), in which the Intent processing unit executes the process without waiting for completion of the input.
(14) The information processing apparatus according to (13),
   in which in a case where possibility that the process related to the Intent extracted on the basis of the attribute information is executed is higher than a predetermined value, the Intent processing unit executes the process without waiting for the completion of the input.
(15) An information processing method to be executed by a computer, the method including:
   acquiring text information in a middle of performance of input; and
   extracting a candidate for the input on the basis of attribute information that is extracted on the basis of the text information.

### REFERENCE SIGNS LIST

- 100: Information processing apparatus
- 110: Control unit
- 111: Speech recognition unit
- 112: Entity extraction unit
- 113: Intent extraction unit
- 114: Input-candidate extraction unit
- 115: Context analysis unit
- 116: Intent processing unit
- 120: Input unit
- 130: Sensor unit
- 140: Image capturing unit
- 150: Output unit
- 160: Communication unit
- 170: Storage unit

## Claims

1. An information processing apparatus comprising:
an acquisition unit that acquires text information in a middle of performance of input; and
an input-candidate extraction unit that extracts a candidate for the input on a basis of attribute information that is extracted on a basis of the text information.

2. The information processing apparatus according to claim 1,
wherein the input is input that a user performs.

3. The information processing apparatus according to claim 2,
wherein the input is speech input that the user performs.

4. The information processing apparatus according to claim 3, further comprising:
a speech recognition unit that analyzes speech information in a middle of performance of the speech input, to output the text information.

5. The information processing apparatus according to claim 1,
wherein the attribute information is information indicating an attribute of an Intent indicating a certain function.

6. The information processing apparatus according to claim 5,
wherein the input-candidate extraction unit extracts, as the candidate for the input, an example sentence corresponding to the Intent that is extracted on the basis of the attribute information.

7. The information processing apparatus according to claim 5,
wherein the attribute information is an Entity.

8. The information processing apparatus according to claim 7,
wherein in a case where a plurality of Entities is extracted on the basis of the text information, weighting is performed on the Entity on a basis of a degree of association between the plurality of Entities, or presence or absence of a co-occurrence relationship between the plurality of Entities.

9. The information processing apparatus according to claim 7,
wherein the Entity or the Intent is extracted on a basis of any of user's preference information, history information regarding the user, and a context including a situation or environment where the user is placed or a state or action of the user.

10. The information processing apparatus according to claim 5,
wherein the attribute information is information regarding a reserved word indicating the Intent.

11. The information processing apparatus according to claim 5, further comprising:
an Intent processing unit that executes a process related to the Intent.

12. The information processing apparatus according to claim 11,
wherein in a case where the text information is insufficient for execution of the process, the acquisition unit acquires text information separately input.

13. The information processing apparatus according to claim 11,
wherein the Intent processing unit executes the process without waiting for completion of the input.

14. The information processing apparatus according to claim 13,
wherein in a case where possibility that the process related to the Intent extracted on the basis of the attribute information is executed is higher than a predetermined value, the Intent processing unit executes the process without waiting for the completion of the input.

15. An information processing method to be executed by a computer, the method comprising:
acquiring text information in a middle of performance of input; and
extracting a candidate for the input on a basis of attribute information that is extracted on a basis of the text information.
